# EUROPEAN PATENT SPECIFICATION

(11) **EP 1 950 088 B1**
(45) Date of publication and mention of the grant of the patent: **07.03.2012**
(21) Application number: 07425045.7
(22) Date of filing: 29.01.2007
(51) Int. Cl.: B60P 3/08, B60P 1/43, B65G 69/28

(54) **Engagement device for adjusting the operating position of manual boards for loading/unloading vehicles**
Eingriffvorrichtung zur Regulierung der Betriebsposition von manuellen Platten für Belade-/Entladefahrzeuge
Dispositif de prise pour régler la position de fonctionnement des tableaux manuels de chargement/déchargement de véhicules

(43) Date of publication of application: 30.07.2008
(73) Proprietor: ROLFO S.p.A., 12042 Bra (Cuneo) (IT)
(72) Inventor: Ghirardo, Giovanni c/o Rolfo S.P.A., 12042 Bra (CN) (IT)
(74) Representative: Garavelli, Paolo

(56) References cited:
- EP-A1- 0 595 051
- DE-A1- 4 407 568
- FR-A- 1 605 260
- GB-A- 2 401 123
- GB-A- 2 402 123
- US-A- 1 329 057
- US-A- 2 004 439
- US-A- 5 525 026

## Description

The present invention refers to an engagement device for the operating adjustment of manual boards for loading/unloading vehicles, in particular from trucks and similar vehicles for transporting other vehicles.

The vehicles (typically motor vehicles) are loaded and unloaded on/from other transport vehicles by using various types and sizes of boards, actuated by various manual or automatic mechanisms. In particular, manual boards can be secured on one side to the transporting vehicle structure by means of linkages in order to be able to adjust their inclination at the opposite end, by adequately incliding them according to the type of vehicles to be loaded and unloaded.

In order to allow adjusting the board inclination to the transporting vehicle structure, nowadays various devices are provided, that are mainly composed of stands, movable pins, racks, etc.: such devices, however, are difficult to operate, requiring a user to use both hands for a correct installation.

US-A-5525026 discloses an automated board for storing vehicles in vehicle-carrying trucks.

Object of the present invention is solving the above prior art problems, by providing an engagement device for operatively adjusting manual boards for loading/unloading vehicles that can be easily activated, allowing an operator to actuate it by using a single hand: this greatly simplifies the procedures for adjusting and abutting the board onto the vehicle-transporting vehicle.

A further object of the present invention is providing a device of the above mentioned type, that can be easily configured and applied onto the board, has a reduced number of component parts and therefore has a reduced cost.

The above and other objects and advantages of the invention, as will appear from the following description, are obtained by an engagement device for operatively adjusting manual boards for loading/unloading vehicles according to claim 1. Preferred embodiments and non-trivial variations of the present invention are the subject matter of the dependent claims.

The present invention will be better described by some preferred embodiments thereof, provided as a nonlimiting example, with reference to the enclosed drawings, in which:
- Figure 1 is a bottom perspective view of a first preferred embodiment of the engagement device of the present invention attached to a board;
- Figure 2 is a perspective view of the board with the device of Fig. 1 in its operating position;
- Figure 3 is a top perspective view of the device of Fig. 1;
- Figure 4 is a detailed view of the device of the invention;
- Figure 5 is a view similar to Fig. 4 taken from a different angle;
- Figure 6 is a bottom perspective view of a second preferred embodiment of the engagement device of the present invention attached to a board;
- Figure 7 is a perspective view of the board with the device of Fig. 6 in its operating position;
- Figure 8 is a top perspective view of the device of Fig. 6;
- Figure 9 is a detailed view of the device of the invention; and
- Figure 10 is a view similar to Fig. 9 taken from a different angle.

With reference to the Figures, two preferred embodiments of the engagement device 1 for operatively adjusting manual boards 2 for loading/unloading vehicles (not shown) from other transporting vehicles (not shown) are described; it is obvious that the device 1 of the invention can be realised in other shapes, dimensions and configurations according to the type and sizes of the vehicles to be loaded and unloaded.

The engagement device 1 of the invention is usually applied to an end of a board 2, that is the end whose inclination is adjusted; the opposite end is the one that is usually linked to the transporting vehicle structure.

The device 1 of the invention substantially comprises:
- gripping means 3, commony composed of a cylindrical handle adapted to be grasped by a user's hand;
- engaging means 5 adapted to engage corresponding engaging elements 6 obtained in operating adjusting means 10, that can be a drilled plate equipped with rows of holes placed at different heights for operatively adjusting the board 2;
- elastic means 7 operatively coupled with the engaging means 5 and adapted to push the engaging means 5 in their operating position engaging the engaging elements 6; and
- actuating means 13 operatively coupled with the engaging means 5 and adapted to overcome the force of the elastic means 7 in order to free the engaging means 5 from their engagement with the engaging elements 6 or in order to arrange the engaging means 5 for their future engagement in the engaging elements 6.

In particular, the gripping means 3 are further adapted to allow lifting and lowering the board 2 in order to arrange and adjust its operating loading/unloading position; such operation is performed by providing the board with a suitable opening 8 in which the operator's hand can be inserted for grasping the gripping means 3 that are accessible through such opening 8.

With a general structure as described above, the device 1 of the invention can be made, as said, with several configurations.

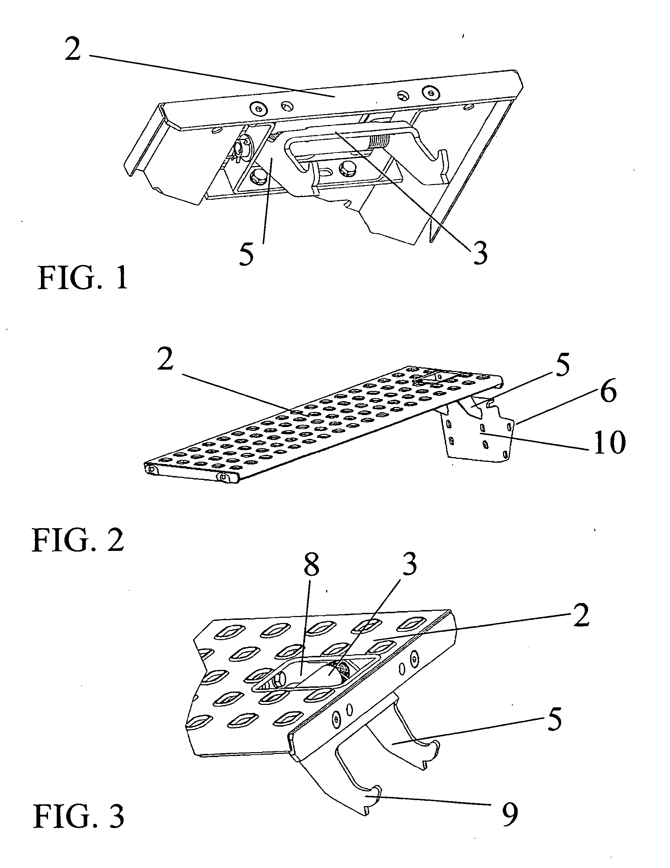

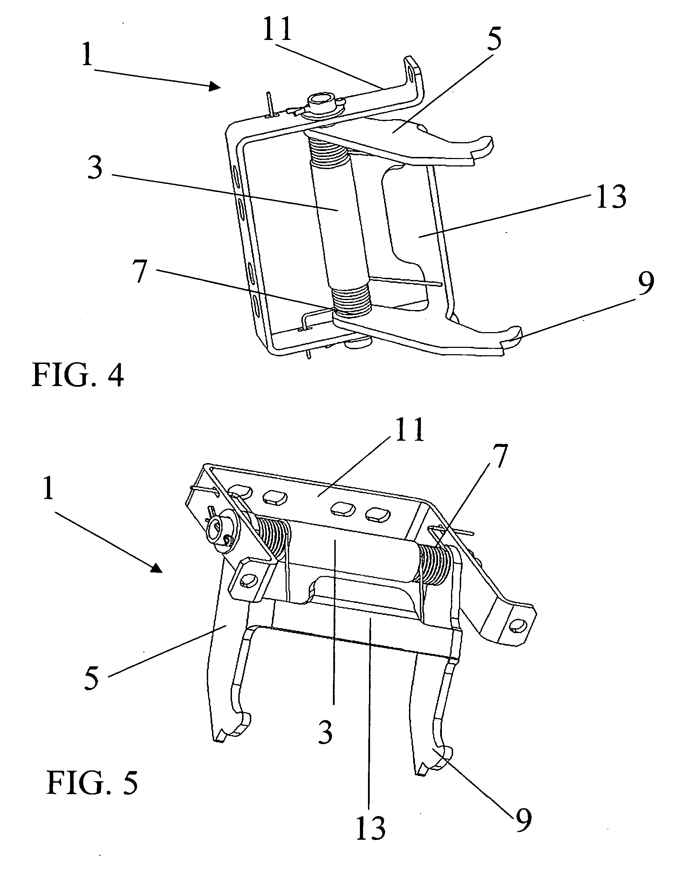

In particular, Figures 1 to 5 show a first embodiment of the inventive device 1 in which the engaging means 5 are composed of at least one elongated body equipped with an engaging tooth 9 adapted to penetrate into a respective engaging element 6 composed of a hole.

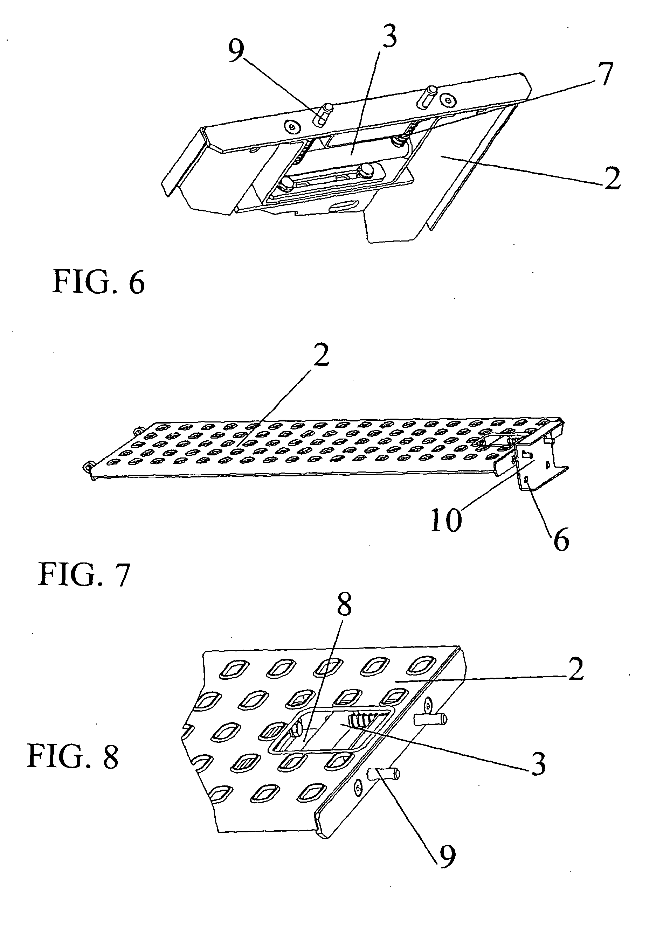

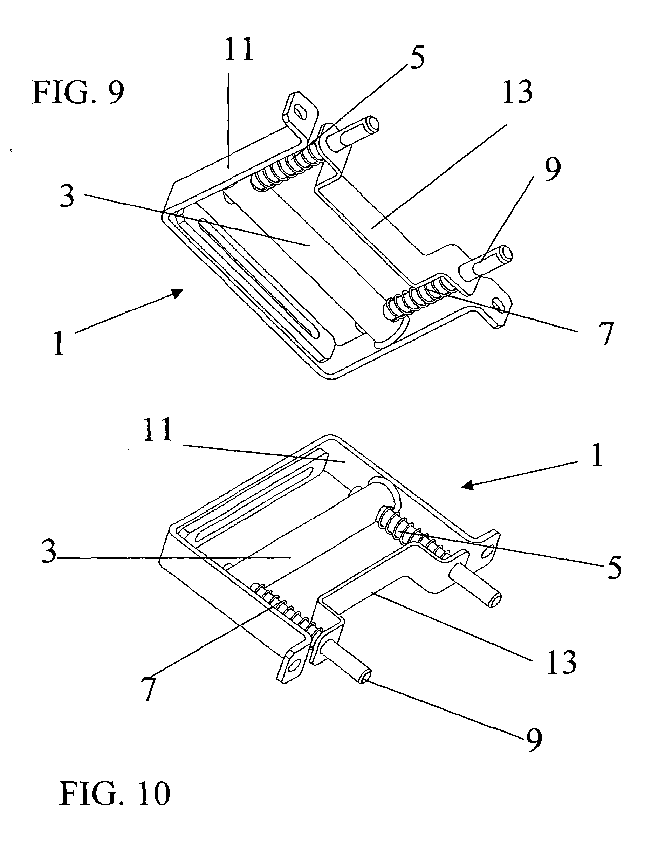

Instead, Figures 6 to 10 show a second embodiment of the inventive device 1 in which the engaging means 5 are composed of at least one elongated cylindrical body equipped with a cylindrical engaging shoe 9 adapted to penetrate into a respective engaging element 6, always composed of a hole.

Preferably, in all configurations, the engaging means 5 are in practice at least two, as shown in the Figures.

Moreover, the elastic means 7 are preferably composed of springs wound around the engaging means 5 (Figures 6 to 10) or cooperating with an end of the engaging means 5 (Figures 1 to 5).

The engagement device 1 of the invention can further comprise a supporting bracket 11 secured to the board 2 and adapted to operatively support the gripping means 3, the engaging means 5 and the elastic means 7.

Finally, the actuating means 13 can be composed of a bracket adapted to push the engaging means 5 into their two, operating and rest, positions.

As clearly appears from the Figures, the engagement device 1 operates when actuated by a single hand of a user that, by operating on suitable actuating means 13 with one or more fingers and overcoming the action of the elastic means 7, unlocks the device 1 to remove the board 2 from the holes 6 and to lower it, or to hook the holes 6 when he has lifted the board.

In particular, the engaging teeth 9 are with such a shape that they cannot accidentally disengage from the engaging elements 6 when lifting the board 2 without actuating the actuating means 13 or due to vibrations or stresses induced by the road plan.

## Claims

1. Engagement device (1) for operatively connecting a manual board (2), for loading/unloading vehicles, to a support (10) adapted to engage said board (2) in such a way that the board (2) assumes an inclined position when loading vehicles onto vehicle-transporting vehicles, where the engagement device (1) is adapted to be applied only to an end of the board (2) which will get in contact with the support (10), and in that the engagement device (1) comprises:
- engaging means (5) adapted to engage corresponding engaging elements (6) obtained in the support (10) in order to secure the board (2) to the support (2) during the vehicle-loading operation,
- elastic means (7) operatively coupled with said engaging means (5) and adapted to push said engaging means (5) in their operating position when engaging said engaging elements (6); and
- actuating means (13) operatively coupled with said engaging means (5) and adapted to overcome the force of said elastic means (7) in order to free said engaging means (5) from their engagement with said engaging elements (6) or to arrange said engaging means (5) for their future engagement with said engaging elements (6), said engaging means (5) being provided with engaging teeth (9) with such a shape that they cannot accidentally disengage from the engaging elements (6) when lifting the board (2) without actuating said actuating means (13) or due to vibrations or stresses induced by the road plan; said actuating means (13) being adapted to be manually actuated by the operator, said actuating means (13) being composed of a bracket adapted to push said engaging means (5) in the operating or rest position and **characterised by** gripping means (3) which allow an operator to grip the board (2) with a single hand and are further adapted to allow lifting and lowering the board (2) in order to arrange and adjust its operating, inclined loading/unloading position, said gripping means (3) being composed of a cylindrical handle adapted to be grasped by the hand of the operator.

2. Engagement device (1) according to claim 1, **characterised in that** said engaging means (5) are composed of at least one elongated body equipped with an engaging tooth (9) adapted to penetrate into a respective engaging element (6) composed of a hole.

3. Engagement device (1) according to claim 1, **characterised in that** said engaging means (5) are composed of at least one elongated cylindrical body equipped with a cylindrical engaging shoe (9) adapted to penetrate into a respective engaging element (6) composed of a hole.

4. Engagement device (1) according to claim 2 or 3, **characterised in that** said engaging means (5) are two.

5. Engagement device (1) according to claim 1, **characterised in that** said elastic means (7) are composed of a spring wound around said engaging means (5) or cooperating with an end of said engaging means (5).

6. Engagement device (1) according to claim 1, **characterised in that** it further comprises a supporting bracket (11) secured to said board (2) and adapted to operatively support said gripping means (3), said engaging means (5) and said elastic means (7).

## Patentansprüche

1. Spannvorrichtung (1) für die Betriebsverbindung einer manuellen Hebebühne (2) für das Be-/Entladen von Fahrzeugen mit einer Halterung (10), die dazu dient, die genannte Hebebühne (2) so zu spannen, dass die Hebebühne (2) eine geneigte Position einnimmt, wenn Fahrzeuge für den Fahrzeugtransport übereinander aufgeladen werden, wo die Spannvorrichtung (1) dazu dient, nur auf ein Endstück der Hebebühne (2) angewendet zu werden, das mit der Halterung (10) in Kontakt kommt, und wo die Spannvorrichtung folgendes einschließt:
- Spannvorrichtungen (5), die dazu dienen, die entsprechenden Spannelemente (6) zu spannen, die in der Halterung (10) angebracht sind, um die Hebebühne (2) während des Ladevorgangs der Fahrzeuge an der Halterung (10) zu befestigen;
- Elastische Vorrichtungen (7), die operativ mit den genannten Spannvorrichtungen (5) verbunden sind, und dazu dienen, die genannten Spannvorrichtungen (5) in den genannten Spannelementen (6) in ihre operative Spannungsposition zu schieben; und
- Antriebsvorrichtungen (13), die operativ mit den genannten Spannvorrichtungen (5) verbunden sind und dazu dienen, die Kraft der genannten elastischen Vorrichtungen (7) zu überwinden, um die genannten Spannvorrichtungen (5) aus ihrer Spannung in den genannten Spannelementen (6) zu befreien, oder um die genannten Spannvorrichtungen (5) für ihre zukünftige Spannung in den genannten Spannelementen (6) vorzubereiten, die genannten Spannvorrichtungen (5) sind mit Spannzähnen (9) ausgestattet, die so geformt sind, dass sie sich nicht zufällig von den Spannelementen (6) lösen werden können, wenn die Hebebühne (2) angehoben wird, ohne die genannten Antriebsvorrichtungen (13) aufgrund der von der Straßenfläche ausgelösten Vibrationen oder Belastungen einzuschalten, die genannten Antriebsvorrichtungen (13) dienen dazu, manuell vom Bediener eingeschaltet zu werden, die genannten Antriebsvorrichtungen (13) bestehen aus einem Bügel, der dazu dient, die genannten Spannvorrichtungen (5) in die Betriebs- oder Ruheposition zu schieben,
und durch folgendes **gekennzeichnet** ist
- Greifvorrichtungen (3), die es einem Bediener ermöglichen, die Hebebühne (2) mit nur einer Hand anzufassen, und außerdem dazu dienen, das Anheben und Absenken der Hebebühne (2) zu ermöglichen, um ihre geneigte Betriebsposition zum Be-/Entladen einzustellen und zu regulieren, die genannten Greifvorrichtungen (3) bestehen aus einem zylinderförmigen Griff, der dazu dient, von der Hand des Bedieners angefasst zu werden.

2. Spannvorrichtung (1) gemäß Patentanspruch 1, die **dadurch gekennzeichnet ist, dass** die genannten Spannvorrichtungen (5) aus mindestens einem länglichen Körper bestehen, der mit einem Spannzahn (9) ausgestattet ist, der dazu dient, in ein entsprechendes Spannelement (6) einzudringen, das aus einer Bohrung besteht.

3. Spannvorrichtung (1) gemäß Patentanspruch 1, die **dadurch gekennzeichnet ist, dass** die genannten Spannvorrichtungen (5) aus mindestens einem länglichen zylinderförmigen Körper bestehen, der mit einem zylinderförmigen Spannschaft (9) ausgestattet ist, der dazu dient, in ein entsprechendes Spannelement (6) einzudringen, das aus einer Bohrung besteht.

4. Spannvorrichtung (1) gemäß Patentanspruch 2 oder 3, die **dadurch gekennzeichnet ist, dass** die genannten Spannvorrichtungen (5) zwei sind:

5. Spannvorrichtung (1) gemäß Patentanspruch 1, die **dadurch gekennzeichnet ist, dass** die genannten elastischen Vorrichtungen (7) aus einer Feder bestehen, die die genannten Spannvorrichtungen (5) umfasst oder mit einem Endstück der genannten Spannvorrichtungen (5) zusammenarbeitet.

6. Spannvorrichtung (1) gemäß Patentanspruch 1, die **dadurch gekennzeichnet ist, dass** sie außerdem einen Tragbügel (11) enthält, der an der genannten Hebebühne (2) befestigt ist und dazu dient, operativ die genannten Greifvorrichtungen (3), die genannten Spannvorrichtungen (5) und die genannten elastischen Vorrichtungen (7) zu halten.

## Revendications

1. Dispositif d'engagement (1) qui relie fonctionnellement une estrade manuelle (2), pour aider au chargement / déchargement des véhicules, à un support (10) capable d'engager ladite estrade (2) de manière à ce que cette estrade (2) prenne une position inclinée lors du chargement de véhicules sur véhicules pour le transport des véhicules, où le dispositif d'engagement (1) peut être appliqué seulement à une extrémité de l'estrade (2) qui entrera en contact avec le support (10), et où le dispositif d'engagement comprend:
- des moyens d'engagement (5) pour engager des éléments d'engagement correspondants (6) pratiqués sur le support (10) dans le but de fixer l'estrade (2) au support (10) pendant l'opération de chargement des véhicules;
- des moyens élastiques (7) accouplés en mode fonctionnel auxdits moyens d'engagement (5) et capables de pousser lesdits moyens d'engagement (5) dans leur position fonctionnelle d'engagement dans lesdits éléments dispositif d'engagement (6); et
- des moyens d'actionnement (13) accouplés en mode fonctionnel auxdits moyens d'engagement (5) et capables de vaincre la force desdits moyens élastiques (7) pour libérer lesdits moyens d'engagement (5) de leur engagement dans lesdits éléments d'engagement (6) ou pour préparer lesdits moyens d'engagement (5) pour leur futur engagement dans lesdits éléments d'engagement (6), lesdits moyens d'engagement (5) étant pourvus de dents d'engagement (9) de forme spéciale pour ne pas se désolidariser par inadvertance auxdits éléments d'engagement (6) lorsque l'estrade est soulevée (2) sans activer lesdits moyens d'actionnement (13) à cause des vibrations ou des contraintes induites par la chaussée, lesdits moyens d'actionnement (13) étant capables d'être actionnés à la main par l'opérateur, lesdits moyens d'actionnement (13) étant composés d'une bride pouvant pousser lesdits moyens d'engagement (5) dans leur position de travail ou bien de repos,
et **caractérisé en ce que**
- les moyens de préhension (3) qui permettent à un opérateur de saisir l'estrade (2) avec une seule main et sont encore capables de permettre l'élévation et l'abaissement de l'estrade (2) dans le but de placer et régler sa position de travail inclinée de chargement/déchargement, lesdits moyens de préhension (3) étant composés d'une prise de préhension cylindrique pouvant être saisie par la main de l'opérateur.

2. Dispositif d'engagement (1) selon la revendication 1, **caractérisé en ce que** lesdits moyens d'engagement (5) sont constitués d'au moins un corps allongé muni d'une dent d'engagement (9) capable de pénétrer dans un élément d'engagement (6) correspondant, constitué par un orifice.

3. Dispositif d'engagement (1) selon la revendication 1, **caractérisé en ce que** lesdits moyens d'engagement (5) sont constitués d'au moins un corps cylindrique allongé muni d'un pointeau cylindrique d'engagement (9) capable de pénétrer dans un élément d'engagement (6) correspondant, constitué par un orifice.

4. Dispositif d'engagement (1) selon la revendication 2 ou 3, **caractérisé en ce que** lesdits moyens d'engagement (5) sont au nombre de deux.

5. Dispositif d'engagement (1) selon la revendication 1, **caractérisé en ce que** lesdits moyens élastiques (7) sont constitués d'un ressort enroulé autour desdits moyens d'engagement (5) ou coopérant avec une extrémité desdits moyens d'engagement (5).

6. Dispositif d'engagement (1) selon la revendication 1, **caractérisé en ce qu'**il comprend en outre une bride de support (11) fixée à ladite estrade (2) et capable de soutenir, en mode fonctionnel, lesdits moyens de préhension (3) desdits moyens d'engagement (5) et desdits moyens élastiques (7).
